# EUROPÄISCHE PATENTSCHRIFT

(11) **EP 2 372 319 B1**
(45) Veröffentlichungstag und Bekanntmachung des Hinweises auf die Patenterteilung: **15.07.2020**
(21) Anmeldenummer: 10189986.2
(22) Anmeldetag: 04.11.2010
(51) Int. Cl.: G01F 23/284, G01F 23/296

(54) **Störechospeicherung bei Behälterrauschen**
Noise echo storage for container noises
Accumulation d'écho parasite dans des bruits de récipients

(30) Priorität: 26.03.2010 US 317892 P; 26.03.2010 EP 10157940
(43) Veröffentlichungstag der Anmeldung: 05.10.2011
(73) Patentinhaber: VEGA Grieshaber KG, 77709 Wolfach (DE)
(72) Erfinder: GRIESSBAUM, Karl, 77796, Mühlenbach (DE); WELLE, Roland, 77709, Oberwolfach (DE)
(74) Vertreter: Maiwald Patent- und Rechtsanwaltsgesellschaft mbH

(56) Entgegenhaltungen:
- WO-A1-2008/080840
- DE-A1- 3 337 690
- DE-A1- 4 308 373
- DE-A1- 4 407 369
- US-A1- 2004 011 126
- US-A1- 2009 235 736

## Beschreibung

### Verwandte Anmeldungen

Die vorliegende Anmeldung beansprucht die Priorität der europäischen Patentanmeldung 10 157 940.7, eingereicht am 26. März 2010, und der US-Provisional Application 61/317,892, eingereicht am 26. März 2010.

### Gebiet der Erfindung

Die vorliegende Erfindung betrifft die Füllstandmessung. Insbesondere betrifft die Erfindung ein Füllstandmessgerät zur Messung eines Füllstands und zur Störechospeicherung, ein Verfahren zur Messung eines Füllstands und zur Störechospeicherung, ein Programmelement und ein computerlesbares Medium.

### Technischer Hintergrund der Erfindung

Bei den nach dem FMCW oder Impuls - Laufzeitverfahren arbeitenden Füllstandsensoren werden elektromagnetische oder akustische Wellen in Richtung einer Füllgutoberfläche emittiert. Daran anschließend zeichnet der Sensor die vom Füllgut und den Behältereinbauten reflektierten Echosignale auf, und leitet daraus den jeweiligen Füllstand ab. Andere Füllstandsensoren arbeiten nach dem Prinzip der geführten Mikrowellen.

Das üblicherweise nach dem aktuellen Stand der Technik verwendete Verfahren baut im Wesentlichen auf einer vom Benutzer bei leerem Behälter durchzuführenden Störechospeicherung auf.
DE 33 37 690 A1, US 5,157,639 und EP 1 628 119 A2 beschreiben solche Verfahren.

Die US 2009/0235736 A1 beschreibt ein Verfahren zum Auswerten und zum Korrigieren von Gesamtmesssignalen von Messgeräten, bei welchen ein Messsignal in Richtung eines Mediums ausgesendet und an deren Oberfläche als Echosignal sowie an Störelementen als Interferenzsignal reflektiert wird. Eine unabhängige Referenzkurve wird auf Basis einer momentanen statischen Referenzkurve ermittelt, wobei die Interferenzsignale basierend auf einem Maskieralgorithmus aus der Echokurve ausgeblendet werden, wenn sich ein technischer Prozesszustand im Behälter oder ein technischer Messzustand des Messgeräts verändert.

Die US 2004/0011126 A1 betrifft eine Vorrichtung zum Messen eines Füllstandes in einem Behälter, welches nach dem Laufzeit-Prinzip arbeitet, bei welchem ausgesendete Wellen von einer Oberfläche des Füllgutes reflektiert werden. Die Vorrichtung weist ferner Grenzsensoren auf, die an der Containerwand angeordnet sind, wobei jeder Grenzsensor ein Signal aussendet, welches angibt, ob die Oberfläche des Füllgutes ober- oder unterhalb des jeweiligen Grenzsensors ist. Die Signale der Grenzsensoren werden dazu verwendet, um das Messergebnis des Füllstandsensors zu überprüfen und gegebenenfalls zu korrigieren.

Die dort beschriebenen Verfahren können in der praktischen Umsetzung zu Problemen führen.

### Zusammenfassung der Erfindung

Es ist eine Aufgabe der Erfindung, eine Initialisierung und/oder Aktualisierung eines Störechospeichers oder der im Füllstandmessgerät vorliegenden Störechodaten bei erhöhtem Behälterrauschen oder erhöhtem EMV-Rauschen bereitzustellen.

Diese Aufgabe wird durch die Merkmale der unabhängigen Patentansprüche gelöst und Weiterbildungen der Erfindung ergeben sich aus den Unteransprüchen.

Es sind ein Füllstandmessgerät zur Messung eines Füllstands und zur Störechospeicherung, ein Verfahren zur Messung eines Füllstands und zur Störechospeicherung, ein Programmelement und ein computerlesbares Medium gemäß den Merkmalen der unabhängigen Patentansprüche angegeben. Die im Folgenden beispielsweise im Hinblick auf das Verfahren beschriebenen Merkmale lassen sich in dem Füllstandmessgerät implementieren und sind somit auch gleichzeitig Merkmale des Füllstandmessgeräts. Ebenso lassen sich die im Folgenden genannten Merkmale des Füllstandmessgeräts auch als Verfahrensschritte implementieren.

Es ist zu beachten, dass im Kontext der Erfindung die Initialisierung von Störechodaten in einem Füllstandmessgerät eine spezielle Variante der Aktualisierung von Störechodaten in einem Füllstandmessgerät darstellen kann. In diesem Fall kann die "Aktualisierung" von Störechodaten demzufolge dadurch realisiert werden, dass eine Initialisierung von Störechodaten erfolgt.

Weiterhin ist zu beachten, dass die Aktualisierung von Störechodaten auch die Aktualisierung zumindest eines Datums, welches nachfolgend dazu verwendet werden kann, Störreflexionen von Behältereinbauten entsprechend bekannten Verfahren zu identifizieren, umfassen kann. Die Aktualisierung der Störspeicherkurve innerhalb eines Störechospeichers ist demzufolge lediglich eine mögliche Realisierung einer Aktualisierung der Störechodaten. Auch eine Störechospeicherung ist eine mögliche Realisierung einer Aktualisierung der Störechodaten. Zudem ist die Aktualisierung eines Störspeichers oder des Störechospeichers eine mögliche Realisierung einer Aktualisierung der Störechodaten.

Gemäß einem ersten Aspekt der Erfindung ist ein Füllstandmessgerät zur Messung eines Füllstands und zur Störechospeicherung angegeben, welches eine Recheneinheit zur Initialisierung und/oder zur Aktualisierung von Störechodaten aufweist. Die Recheneinheit ist hierbei derart ausgeführt, in Abhängigkeit zumindest eines ersten Wertes, der zumindest eine Eigenschaft eines ersten Rauschens charakterisiert oder zumindest mit einem ersten Rauschen korrespondiert, eine Entscheidung darüber zu treffen, ob die Initialisierung und/oder die Aktualisierung der Störechodaten erfolgen soll oder nicht. Weiterhin ist die Recheneinheit ausgeführt, die Aktualisierung dann auch durchzuführen.

Bei dem ersten "Rauschen" handelt es sich um sensoreigenes Rauschen, beispielsweise um thermisches Rauschen, und/oder Behälterrauschen und/oder EMV-Rauschen. In anderen Worten handelt es sich also um Rauschen, das auf den internen Aufbau des Sensors zurückzuführen ist und/oder Rauschen, das auf den Behälter zurückzuführen ist und/oder Rauschen, das durch externe elektrische, elektromagnetische, akustische oder optische Einflüsse, welche auf den Sensor und/oder den Behälter einwirken, zurückzuführen ist. Dieses Rauschen kann sich auf das Messsignal, und somit auch auf die Echokurve auswirken, so dass aus einer Analyse der Echokurve eine Charakterisierung des Rauschens möglich sein kann.

Im Kontext dieser Erfindung soll das sensoreigene Rauschen als Rauschen definiert sein, welches durch den internen Aufbau des Sensors, beispielsweise die darin verwendeten elektronischen Komponenten und deren thermisches Rauschen, verursacht wird.

Das Behälterrauschen soll als Rauschen definiert sein, welches durch eine Vielzahl von Überlagerungen des ursprünglich vom Sensor emittierten Signals verursacht wird. Die Vielzahl an Überlagerungen kann dabei durch eine Vielzahl an möglichen Reflexionen innerhalb eines Behälters verursacht werden.

Das EMV-Rauschen soll als Rauschen definiert sein, welches auf den Einfluss externer Quellen zurückzuführen ist. Das EMV-Rauschen mag beispielsweise durch leitungsgebundene elektrische Störungen innerhalb der Versorgungleitung des Sensors verursacht werden, oder aber auch durch nicht leitungsgebundene, elektromagnetische Störungen, wie sie beispielsweise durch Mobilfunk verursacht werden. Weiterhin mag das EMV-Rauschen durch akustische Störungen verursacht werden, beispielsweise durch den Lärm einer pneumatischen Befüllung. Es mag auch möglich sein, dass das EMV-Rauschen durch optische Einflüsse, beispielsweise durch Streulicht, verursacht wird.

Allen Rauscheinflüssen gemein ist, dass sie zu einer Anhebung des messbaren Rauschpegels innerhalb des gemessenen Signals eines Füllstandmessgerätes führen können. Zudem mag es möglich sein, dass sich Kombinationen der beschriebenen Rauscharten überlagern, und zu einem messtechnisch erfassbaren Gesamtrauschen führen.

Eine Eigenschaft eines Rauschens mag beispielsweise der Mittelwert des Signals im Bereich des Rauschens sein. Eine weitere Eigenschaft mag beispielsweise eine Varianz oder aber auch eine Bandbreite des Rauschens im Signal sein. Zudem mögen mehrere Statistikwerte, die beispielsweise aus dem Messsignal abgeleitet werden können, gemäß dem Stand der Technik in Kombination eine Eigenschaft des Rauschens sein. Weiterhin mögen auch Stichproben des Signals oder gefilterte Signalverläufe eine Eigenschaft des Rauschens sein.

Gemäß einem weiteren Aspekt der Erfindung charakterisiert der zumindest erste Wert die mittlere Leistung eines Rauschens.

Gemäß einem weiteren Aspekt der Erfindung ist ein Verfahren zur Messung eines Füllstands und zur Störechospeicherung angegeben, bei dem eine Entscheidung in Abhängigkeit zumindest eines ersten Wertes, der zumindest eine Eigenschaft eines ersten Rauschens charakterisiert oder zumindest mit dem ersten Rauschen korrespondiert, darüber getroffen wird, ob eine Initialisierung und/oder eine Aktualisierung von Störechodaten erfolgt oder nicht. Dann erfolgt Initialisierung und/oder die Aktualisieren der Störechodaten, falls die Entscheidung dafür getroffen ist.

Gemäß einem weiteren Aspekt der Erfindung ist ein Programmelement angegeben, das, wenn es auf einem Prozessor eines Füllstandmessgeräts ausgeführt wird, den Prozessor anleitet, die oben und im Folgenden beschriebenen Schritte durchzuführen.

Gemäß einem weiteren Aspekt der Erfindung ist ein computerlesbares Medium angegeben, auf dem ein Programmelement gespeichert ist, das, wenn es auf einem Prozessor (also einer Recheneinheit) eines Füllstandmessgeräts ausgeführt ist, den Prozessor anleitet, die oben und im Folgenden beschriebenen Schritte durchzuführen. Gemäß einem Ausführungsbeispiel der Erfindung ist die Recheneinheit ausgeführt, in Abhängigkeit zumindest eines zweiten Wertes, der zumindest eine Eigenschaft eines zweiten Rauschens charakterisiert oder zumindest mit dem zweiten Rauschen korrespondiert, eine Entscheidung darüber zu treffen, ob die Initialisierung und/oder Aktualisierung der Störechodaten erfolgen soll oder nicht. Weiterhin ist die Recheneinheit ausgeführt, die Initialisierung und/oder Aktualisierung dann auch durchzuführen

Insbesondere können mehrere Werte, die auf ein Rauschen zurückzuführen sind, zur Aktualisierung und/oder Initialisierung der Störechodaten verwendet werden. Gemäß einem weiteren Ausführungsbeispiel der Erfindung ist die Recheneinheit zur Bestimmung des zumindest ersten Wertes und/oder des zumindest zweiten Wertes unter Verwendung einer vorher erfassten Echokurve ausgeführt.
Beispielsweise ist die Recheneinheit zur Bestimmung des zumindest ersten Wertes und/oder des zumindest zweiten Wertes auf Basis einer Regressionsberechnung oder einer Histogrammanalyse ausgeführt.

Gemäß einem weiteren Ausführungsbeispiel der Erfindung ist die Recheneinheit zur Initialisierung und/oder Aktualisierung von Störechodaten in Abhängigkeit des zumindest ersten Wertes und/oder des zumindest zweiten Wertes ausgeführt. Die Recheneinheit ist zur Bestimmung, ob der erste Wert, der zumindest eine Eigenschaft eines ersten Rauschens charakterisiert (also dem aktuellen Behälterrauschen oder dem aktuellen sensoreigenen Rauschen oder dem EMV-Rauschen), größer ist als der zweite Wert, der mit einem vorbestimmten sensoreigenen Rauschen korrespondiert, ausgeführt. Wenn der erste Wert größer ist als der zweite Wert (oder wenn der erste Wert deutlich größer ist als der zweite Wert) aktiviert die Recheneinheit einen Störspeicheraktualisierungsmodus.

In anderen Worten wird der Störspeicheraktualisierungsmodus aktiviert, wenn beispielsweise das aktuell gemessene Rauschen größer ist, als ein z.B. bei der Sensorfertigung gespeichertes Referenzrauschen.

Gemäß einem weiteren Ausführungsbeispiel der Erfindung weist das Füllstandmessgerät weiterhin einen Speicher auf, in welchem beispielsweise der zweite Wert abgelegt sein kann. Insbesondere kann in diesem Speicher die Störechokurve abgelegt sein.

Gemäß einem weiteren Ausführungsbeispiel der Erfindung führt eine Abarbeitung der Verfahrensschritte des Störspeicheraktualisierungsmodus zu einer Verringerung von Werten einer in dem Speicher abgelegten Störechokurve, wenn der erste Wert (also z. B. das Behälterrauschen oder das thermische Rauschen oder das EMV-Rauschen) sinkt.

Beispielsweise sinken alle Amplitudenwerte der Störechokurve, die nichts mit dem tatsächlichen Füllstandecho oder einem Störecho zu tun haben (also lediglich auf Behälterrauschen und/oder EMV-Rauschen zurückzuführen sind).

Gemäß einem weiteren Ausführungsbeispiel der Erfindung handelt es sich bei dem Füllstandmessgerät um einen Füllstandradar.

### Kurze Beschreibung der Figuren

Fig. 1 zeigt eine mögliche Vorgehensweise bei der Echosignalverarbeitung.
Fig. 2 zeigt ein in einen Behälter eingebautes Füllstandmessgerät sowie eine entsprechende Echokurve.
Fig. 3 zeigt eine Störechobewertung in einem Füllstandmessgerät.
Fig. 4 zeigt eine Echokurve bei einem leeren Behälter.
Fig. 5 zeigt eine Echokurve bei einem leicht gefüllten Behälter.
Fig. 6 zeigt die Störechospeicherung
Fig. 7 zeigt die Störechobewertung
Fig. 8 zeigt ein Flussdiagramm eines Verfahrens
Fig. 9 zeigt die Störechospeicherung gemäß der Erfindung.
Fig. 10 zeigt ein Flussdiagramm zur Störspeicherinitialisierung.
Fig. 11 zeigt ein Flussdiagramm zur Füllstandmessung.
Fig. 12 zeigt ein Flussdiagramm zur Störechobewertung

Die Darstellungen in den Figuren sind schematisch und nicht maßstäblich.

In der folgenden Figurenbeschreibung werden für die gleichen oder ähnlichen Elemente die gleichen Bezugsziffern verwendet.

### Detaillierte Beschreibung von Ausführungsbeispielen

Die vorliegende Erfindung bezieht sich auf ein Verfahren zur Messung von Füllständen aller Art.

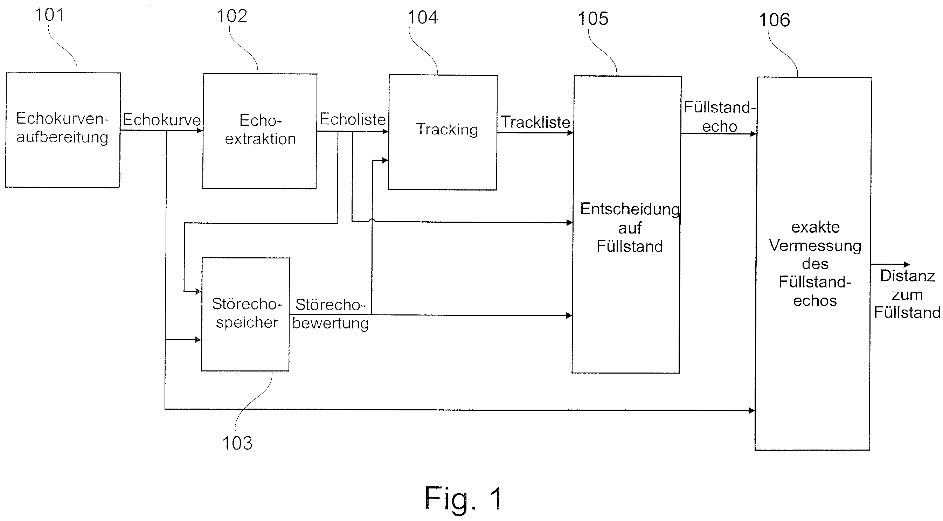

Fig. 1 zeigt den grundsätzlichen Ablauf der Echosignalverarbeitung innerhalb eines Füllstandmessgerätes. Im Block "Echokurvenaufbereitung" 101 sind alle Hardware- und Softwareeinheiten enthalten, die benötigt werden, um eine Echokurve als Abbild der aktuellen Reflexionsverhältnisse innerhalb eines Behälters bereitzustellen. Die Echokurve wird beispielsweise in digitaler Form innerhalb eines

Mikroprozessorsystems erfasst, und mit Hilfe bestimmter Verfahren auf darin enthaltene Echos untersucht.

Die innerhalb des Blocks "Echoextraktion" 102 zu diesem Zweck angewendeten Verfahren umfassen insbesondere Verfahren aus dem Bereich der schwellwertbasierenden Echoextraktion oder auch Verfahren auf Basis einer skalenbasierenden Echoextraktion. Nach Abarbeitung des Echoextraktionsverfahrens wird eine digitale Echoliste bereitgestellt, die beispielsweise Angaben zu Anfang, Ort und Ende eines oder mehrerer in der Echokurve enthaltenen Echos beinhaltet.

Innerhalb des Störechospeichers 103 werden die Echos der Echoliste mit einer vorab im Gerät angelegten Störechokurve verglichen, um Informationen darüber zu gewinnen, welche der Echos der Echoliste von fest im Behälter eingebauten Störstellen verursacht werden. Die gewonnenen Informationen werden in Form einer Störechobewertungsliste nach außen hin bereitgestellt, und können beispielsweise vom Tracking 104, aber auch von der Entscheidung auf Füllstand 105 nutzbringend verwendet werden.

Um die Zuverlässigkeit der Echosignalverarbeitung eines Füllstandmessgerätes weiter zu erhöhen, werden die gefundenen Echos innerhalb des Blocks "Tracking" 104 in einen historischen Kontext gestellt. Innerhalb des Tracking wird insbesondere der Verlauf des Ortes eines Echos über mehrere Einzelmessungen hinweg verfolgt, und diese gesammelte Information in Form eines Tracks im Speicher repräsentiert. Die gesammelten Historieninformationen mehrerer Echos werden in Form einer Trackliste nach außen hin bereitgestellt.

Im Block "Entscheidung auf Füllstand" 105 werden die Daten der aktuellen Echoliste, die Informationen über den zeitlichen Verlauf einzelner Echos und die Bewertungen des Störechospeichers miteinander abgeglichen. Von besonderer Bedeutung zur Unterdrückung von Störreflexionen ist dabei die Berücksichtigung der vom Störspeicher ermittelten Störechobewertung.

Um die Genauigkeit der Füllstandmessung weiter zu verbessern, kann die Position des bestimmten Füllstandechos durch den optionalen Block "exakte Vermessung des Füllstandechos" 106 unter Anwendung rechenzeitintensiver Verfahren, beispielsweise Interpolationsverfahren, mit hoher Genauigkeit bestimmt werden.

Die bestimmte Distanz zum Füllstand wird nach außen hin bereitgestellt. Die Bereitstellung kann in analoger Form (4..20 mA Schnittstelle) oder auch in digitaler Form (Feldbus) erfolgen.

Die Vorteile der Erfindung ergeben sich aus den speziellen Randbedingungen, denen die Echosignalverarbeitung innerhalb eines Füllstandmessgerätes unterliegt.

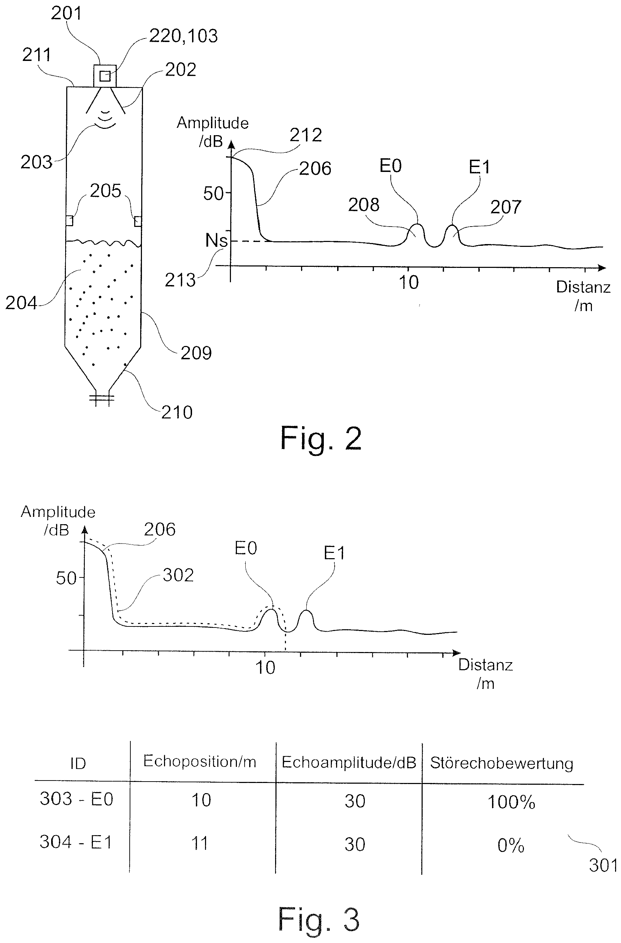

Fig. 2 zeigt eine typische Anwendung eines solchen Gerätes.

Es sei an dieser Stelle darauf hingewiesen, dass sämtliche Pegel in der vorliegenden Beschreibung und in den zugehörigen Figuren als Relativpegel zu verstehen sind. Der Absolutpegel, welcher als Bezugsgröße für die Berechnung der Relativpegel verwendet wird, hat auf die Funktionsweise der vorliegenden Erfindung keinerlei Einfluss.

Das Füllstandmessgerät 201 strahlt über die Antenne 202 ein Signal 203 in Richtung des zu vermessenden Mediums 204 ab. Das Füllstandmessgerät selbst kann mit Hilfe von Ultraschall, Radar, Laser oder dem Prinzip der geführten Mikrowelle die Distanz zum Medium ermitteln. Als Signale kommen dementsprechend sowohl Ultraschallwellen als auch elektromagnetische Wellen in Betracht. Das Medium 204 reflektiert die auftreffende Welle zurück zum Messgerät, wo diese empfangen und von der Recheneinheit 220 verarbeitet wird.

Gleichzeitig wird das abgestrahlte Signal auch von Behältereinbauten, beispielsweise einer umlaufenden Schweißnaht 205 reflektiert. Die im Füllstandmessgerät 201 empfangene Echokurve 206 kann somit neben dem vom Füllstand 204 hervorgerufenen Nutzecho 207 auch Echos von fest eingebauten Störstellen 208 enthalten, welche nachfolgend als Störechos bezeichnet werden. Der Füllgutbehälter 209 besitzt in dem vorliegenden Beispiel einen konischen Auslauf 210.

Innerhalb der nun anlaufenden Signalverarbeitung wird die Echokurve gezielt auf Echos hin untersucht (siehe Schritt 102 in Fig. 1). Als Ergebnis der Echoextraktion wird eine Echoliste 301 nach dem Schema der Fig. 3 erzeugt. Die Echoliste beinhaltet neben den charakteristischen Kennwerten des von der Schweißnaht 205 erzeugten Störechos E0, 208 ein weiteres vom Medium 204 erzeugtes Echo E1, 207.

Selbstverständlich stellen die dargestellten Merkmale der Echoliste lediglich eine spezielle Implementierung einer Echoliste dar. In der Praxis sind auch Echolisten mit weiteren oder veränderten Merkmalen eines Echos gebräuchlich.

Die Entscheidung, welches der vorliegenden Echos (E0, E1) das vom Medium 204 erzeugte Füllstandecho ist, kann durch Anwendung einer Störechospeicherung maßgeblich vereinfacht werden. Beispielsweise wird vorzugsweise bei nahezu entleertem Behälter eine vom Benutzer zu initiierende Störechospeicherung durchgeführt. Als Ergebnis dieses Verfahrensschrittes wird innerhalb des Störechospeichers 103 (siehe Figs. 1 und 2) eine Störechokurve 302 angelegt, die den Amplitudenverlauf möglicher Störechos E0, 208 exakt erfasst. Während der daran anschließenden Betriebsphase des Sensors kann mit Hilfe des Störechospeichers 103 und der darin enthaltenen Störechokurve 302 eine Klassifikation der Echos der Echoliste 301 durchgeführt werden. Im vorliegenden Beispiel wird Echo E0 208, 303 eindeutig als Störecho erkannt und entsprechend bewertet. Die Entscheidung auf das verbliebene Echo E1 207, 304 als Füllstandecho wird trotz der nahezu identischen Amplitudenwerte der Echos der Echoliste 301 trivial.

Die Anlage der Störechokurve kann vom Sensor auch automatisch initiiert werden.

Das zuvor beschriebene Verfahren kann in der praktischen Umsetzung immer wieder zu Problemen führen.

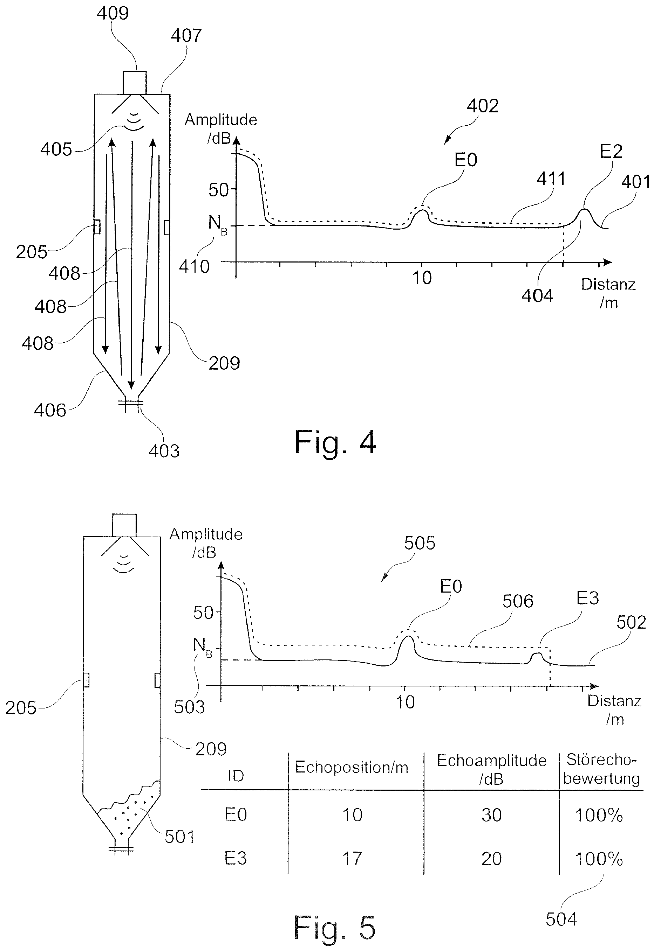

Fig. 4 zeigt den Behälter 209 mit der umlaufenden Schweißnaht 205 in leerem Zustand. Die darin gemessene Echokurve 401 wird im Graphen 402 dargestellt. Im Vergleich zur Echokurve 206 aus Fig. 2 ist deutlich zu sehen, dass das von der Schweißnaht 205 verursachte Echo E0 208 an identischer Stelle wieder erscheint, wohingegen das vom Füllgut 204 verursachte Füllstandecho aufgrund fehlender Befüllung durch das vom Behälterboden 403 verursachte Echo E2 404 ersetzt wird.

Bei genauerer Betrachtung fällt im direkten Vergleich zur Echokurve 206 aus Fig. 2 zudem auf, dass der Rauschpegel N_{B} 410 der Echokurve 401 bei ca. 25 dB liegt, wohingegen der vergleichbare Pegel N_{S} 213 in Fig. 2 bei ca. 15 dB liegt.

Der grafisch visualisierte Effekt einer Rauschpegelerhöhung kann sich aus den speziellen Reflexionsverhältnissen ergeben, wie sie beim Einsatz von Füllstandmessgeräten auftreten können.

Im halb angefüllten Behälter 209 aus Fig. 2 wird die vom Füllstandmessgerät 201 emittierte Welle 203 an der Oberfläche des Füllgutes 204 reflektiert. Mit dieser Reflexion geht beispielhaft eine starke Dämpfung der emittierten Welle 203 einher. Das vom Füllstandmessgerät empfangene Signal möge daher 40 dB oder mehr unter dem Pegel der ursprünglich emittierten Welle liegen. Signalanteile, welche nach der Reflektion am Medium eine erneute Umlenkung an der Behälterdecke 211 erfahren, treffen nach entsprechender Laufzeit ein zweites Mal auf die Oberfläche des Füllgutes 204, und werden dort erneut reflektiert. Bei dieser zweiten Reflektion möge die Welle erneut eine Dämpfung um 40 dB erfahren. Geht man beispielhaft von einem abgestrahlten relativen Pegel 212 von ca. 80 dB aus, so wird sofort ersichtlich, dass der Pegel einer zweifach reflektierten Welle weit unterhalb des Pegels des sensoreigenen Rauschens N_{S} 213 des Füllstandmessgerätes liegt. Das sensoreigene Rauschen eines Füllstandmessgerätes wird im Wesentlichen durch das thermische Rauschen der verwendeten Halbleiterbauelemente verursacht, und liegt bei kommerziellen Füllstandmessgeräten typischerweise bei ca. 15 dB.

Andere Verhältnisse treten nun bei Messungen in komplett entleerten Behältern mit sehr guten Reflexionsverhältnissen auf. Fig. 4 verdeutlicht die Verhältnisse. Im beispielhaft betrachteten Fall einer Füllstandmessung mit Radar wird die emittierte Welle 405 vom Behälterboden 403 und auch von den konischen Behälterteilen 406 des metallischen Behälters 209 reflektiert. Bedingt durch die exzellenten Reflexionseigenschaften der metallischen Behälterwand erfährt das Radarsignal durch diese Reflexion eine nur sehr schwache Dämpfung. Ein Großteil der ursprünglich emittierten Signalenergie kann daher vom Behälterdeckel 407 erneut reflektiert werden. Es wird sofort ersichtlich, dass bedingt durch die kleinen Reflexionsverluste das Signal sehr oft zwischen Behälterdecke und Behälterboden hin und her reflektiert werden kann. Die Signalpfeile 408 sollen die mehrfachen Propagationen des Signals im Behälter verdeutlichen. Das Füllstandmessgerät 409 initiiert periodische Messzyklen, beispielsweise in einem zeitlichen Raster, welches der Laufzeit des abgestrahlten Signals auf einer Länge von 40 m entspricht.

Aufgrund der perfekten Reflexionsverhältnisse können beim Start einer neuen Messung sowohl Signalanteile von der letzten Messung als auch von zeitlich davor liegenden Messungen im Behälter hin- und herlaufen 408. Alle am Detektor des Füllstandmessgerätes gleichzeitig eintreffenden Signale interferieren nun im Empfangsteil des Füllstandmessgerätes. Aufgrund der Vielzahl möglicher Signalpfade, welche zeitgleich am Detektor eintreffen und sich dort überlagern, können die zugehörigen Einzelechos nicht mehr separiert werden, und führen symptomatisch zu einer Erhöhung des Rauschpegels N_{B} 410 auf ca. 25 dB.

Der Rauschpegel N_{B} wird durch die Überlagerung verschiedener Signalanteile aus dem Behälter verursacht, und soll nachfolgend als Behälterrauschen betrachtet werden. Es sei an dieser Stelle vermerkt, dass dieses "Behälterrauschen" ursächlich nichts mit dem sensoreigenen Rauschen N_{S} des Sensors, welches durch thermische Rauschanteile verursacht wird, gemein hat. Die Nomenklatur wird in der vorliegenden Beschreibung ausschließlich aufgrund der Ähnlichkeit in Bezug auf den Verlauf einer empfangenen Echokurve verwendet.

Wird nun nach bekannten Verfahren bei leerem Behälter eine Störechospeicherung ausgelöst, so wird im Sensor eine erhöhte Störechokurve 411 abgelegt. Das von der Schweißnaht 205 verursachte Störecho E0 ist darin korrekt enthalten. Das vom Behälterboden verursachte Bodenecho E2 wird nicht in den Störechospeicher aufgenommen, da es im Falle eines leeren Behälters als aktueller Füllstand verwendet werden soll.

Fig. 5 zeigt nun in einem weiteren Schritt die Verhältnisse, wie sie sich nach einer leichten Befüllung des Behälters ergeben können. Bedingt durch die Materialeigenschaften des Füllgutes 501 (bei dem es sich um ein Schüttgut handelt) und die mitunter ungünstige Schüttlage setzt nun schlagartig eine starke Dämpfung der reflektierten Radarwelle ein. Die zyklische Reflektion von Signalanteilen innerhalb des Behälters 209, wie sie noch in Fig. 4 zu sehen war, kommt unmittelbar zum Erliegen. Die empfangene Echokurve 502 enthält neben der Schweißnahtreflektion (E0) die Reflektion des Füllgutes (E3), welche amplitudenmäßig jedoch nur stark verringert empfangen werden kann. Gleichzeitig ist der Echokurve 502 zu entnehmen, dass das Behälterrauschen N_{B} 503 wieder auf das Niveau des sensoreigenen Rauschens N_{S} des Füllstandmessgerätes 213 abgesunken ist. Die auf Basis der Echokurve 502 erzeugte Echotabelle 504 zeigt deutlich, dass sowohl das Echo E0 der Behälterschweißnaht 205 als auch das Echo des Mediums 501 als Störecho identifiziert werden. Ein Vergleich mit der Echokurvendarstellung 505 ergibt, dass die Echos E0 und E3 in ihrem Verlauf beide unterhalb der Störechokurve 506 liegen und folglich als Störecho betrachtet werden. Eine Messung des Füllstandes ist in diesem Zustand nun nicht mehr möglich. Das Füllstandmessgerät wird beispielsweise eine Fehlermeldung "Echoverlust" absetzen.

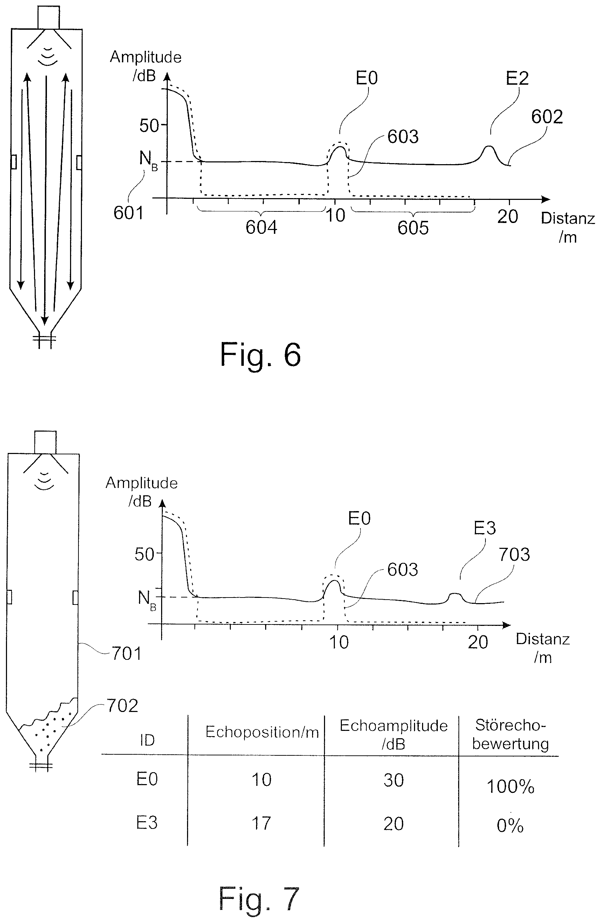

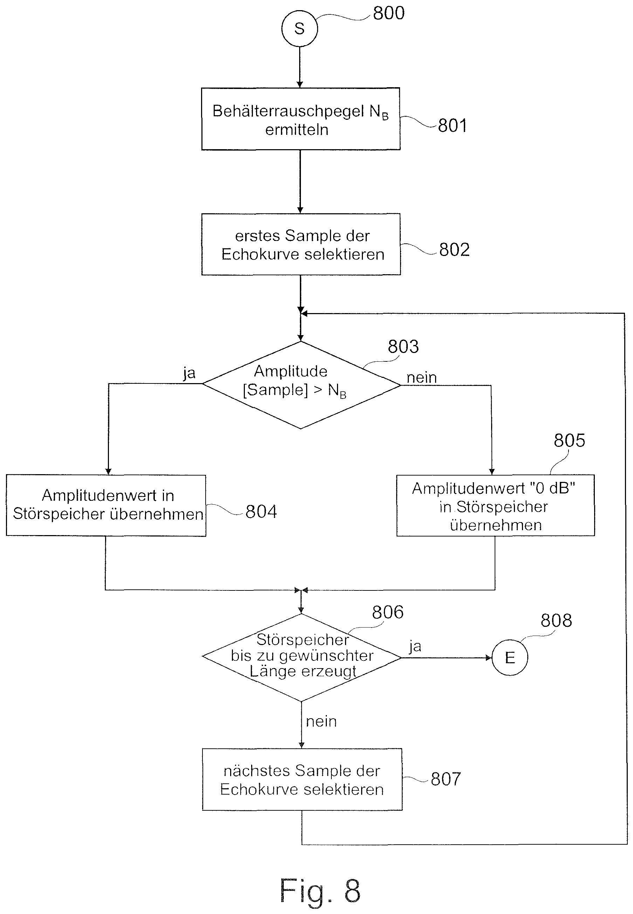

In einem Beispiel, das nicht Teil der Erfindung ist, wird dieses Problem gemäß dem Ablaufdiagramm in Fig. 8 gelöst. Die sich dadurch ergebenden Verhältnisse werden beispielhaft durch die Darstellungen in den Figs. 6 und 7 verdeutlicht.

Das Verfahren setzt mit der Initialisierung oder Aktualisierung eines Störechospeichers 103 (siehe Figs. 1 und 2) ein, wobei vorgenannte Aktionen sowohl vom Benutzer als auch vom Sensor selbst initiiert werden können. Im Schritt 801 wird anhand der aktuellen Echokurve der Behälterrauschpegel N_{B} ermittelt. Dabei kommen entsprechende Verfahren zum Einsatz, beispielsweise eine Regressionsberechnung oder aber auch eine Histogrammanalyse.

Im Schritt 802 (Selektion des ersten Samples der Echokurve) wird nun der erste Abtastpunkt der aktuellen Echokurve selektiert. Falls die Amplitude dieses Samples größer ist als der ermittelte Behälterrauschpegel N_{B}, wird im Schritt 804 dieser Amplitudenwert dazu verwendet, den Störspeicher zu initiieren oder zu aktualisieren. In diesem Verfahrensschritt können selbstverständlich weitere Algorithmen zur Verbesserung der Funktion eines Störechospeichers Verwendung finden, beispielsweise eine Erhöhung der abzulegenden Störechowerte um einen parametrierten Offset - Wert. Ist die Amplitude der Echokurve nicht signifikant größer als das Behälterrauschen, so wird der Störspeicher an entsprechender Stelle gelöscht oder alternativ auf 0 dB gesetzt 805. Das beschriebene Verfahren wird nun Sample für Sample fortgesetzt, bis die vom Benutzer gewünschte Länge einer Störechokurve erzeugt worden ist. Das Verfahren endet schließlich im Endezustand 808.

Fig. 6 zeigt nun die Auswirkungen des beschriebenen Verfahrens beim Anlegen des Störechospeichers. Der Pegel des Behälterrauschens N_{B} 601 ist über weite Bereiche identisch dem Pegel der Echokurve 602. Im Bereich zwischen 2 m und 9,50 m 604 wird der Störechospeicher folglich auf 0 dB initialisiert, ebenso im Bereich zwischen 10,50 m und 18 m.

Fig. 7 zeigt nun die Verhältnisse bei Befüllung des Behälters 701 mit einem Füllgut 702. Das aus der Echokurve 703 ermittelte Behälterrauschen N_{B} sinkt bedingt durch das Ausbleiben von Mehrfachreflexionen ab. Zudem sinkt der Pegel des Füllstandechos E3 auf ein Niveau von weniger als 25 dB ab. Bedingt durch die erfindungsgemäß erzeugte Störechokurve 603 ist der Störechospeicher 103 (siehe Figs. 1 und 2) nun aber in der Lage, lediglich das Echo E0 als Störecho zu identifizieren. Das Echo E3 kann auf einfache Art als Füllstandecho identifiziert werden.

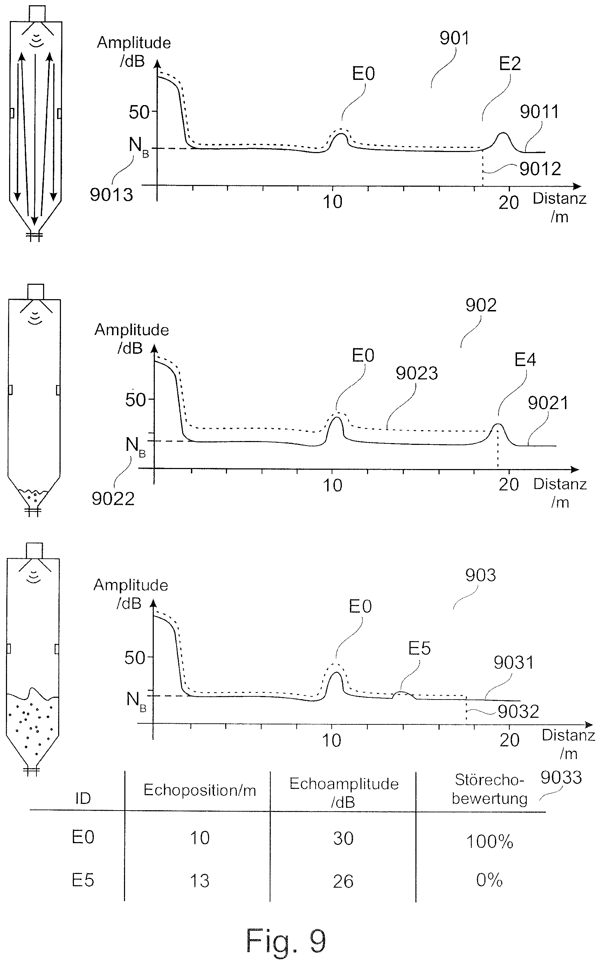

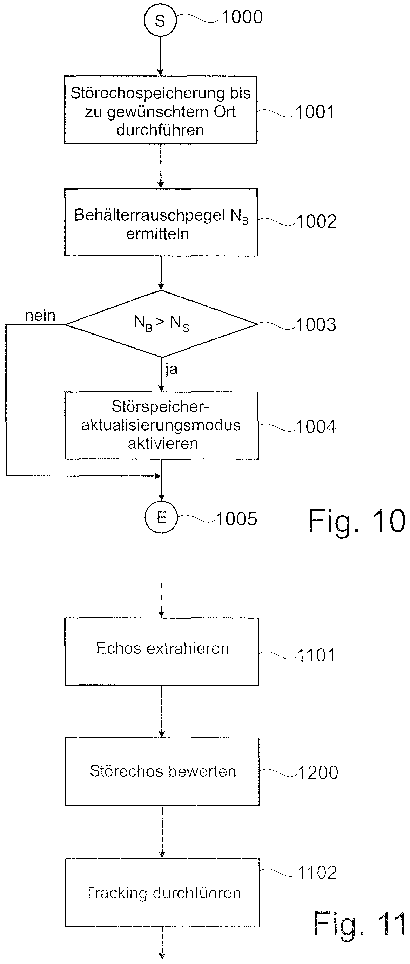

Gemäß der Erfindung kann das Problem auch gemäß den Ablaufdiagrammen der Figs. 10 bis 12 gelöst werden. Die sich dadurch ergebenden Verhältnisse werden beispielhaft durch die Darstellungen in Fig. 9 verdeutlicht.

Das Verfahren teilt sich in zwei Verfahrensteile. Verfahrensteil I wird in Fig. 10 dargestellt, und repräsentiert den Teil des Verfahrens, der im Rahmen einer Initialisierung oder Aktualisierung eines Störechospeichers 103 durchlaufen wird. Der Verfahrensteil beginnt im Schritt 1000. Im Schritt 1001 wird eine Störechospeicherung bis zum gewünschten Ort durchgeführt. Hierfür können bekannte Verfahren angewendet werden. Der gewünschte Ort wird entweder vom Benutzer vorgegeben oder von anderen Softwareteilen innerhalb des Sensors ermittelt. Üblicherweise wird eine Störechospeicherung bis zu einem Ort durchgeführt, dessen Distanz wenig kleiner ist als die Distanz bis zum Beginn des aktuellen Füllstandechos. Im Schritt 1002 wird anhand der aktuell vorliegenden Echokurve der Rauschpegel N_{B} im Behälter ermittelt. Dies kann beispielsweise durch eine Regressionsberechnung oder aber auch eine Histogrammanalyse erfolgen.

Im Schritt 1003 wird nun überprüft, ob das Behälterrauschen N_{B} größer als das sensoreigene Rauschen des Füllstandmessgerätes N_{S} ist. Das sensoreigene Rauschen wird zu diesem Zweck innerhalb der Fertigungsstätte des Füllstandmessgerätes ermittelt und in geeigneter Form im nichtflüchtigen Speicherbereich 103 des Sensors als Kalibrierwert abgelegt. Ist das Behälterrauschen während der Initialisierung oder Aktualisierung des Störechospeichers größer als das sensoreigene Rauschen des Sensors, so wird innerhalb der Signalverarbeitung der Störspeicheraktualisierungsmodus aktiviert 1004.

Fig. 11 zeigt beispielhaft einen Ausschnitt aus der Signalverarbeitungskette innerhalb eines Füllstandmessgerätes, wie sie üblicherweise in jedem Messzyklus einmal abgearbeitet wird.

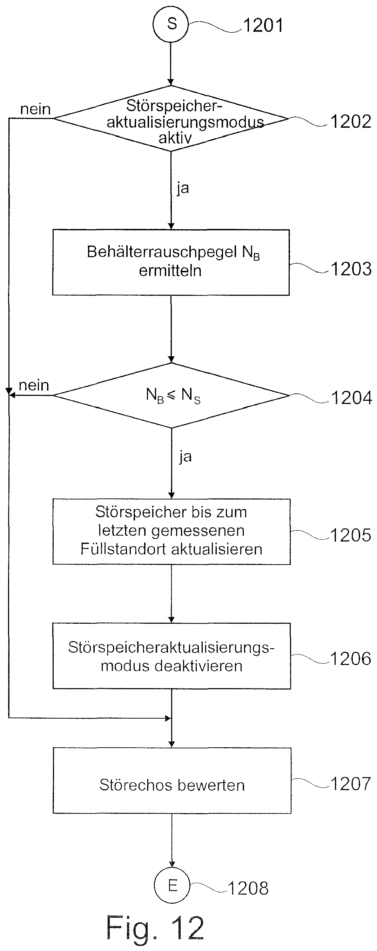

Die klassische Bewertung von Störechos 1200 wird beispielhaft im Anschluss an die Extraktion von Echos aufgerufen. Der Block 1200 wird nun komplett durch den Ablauf des Verfahrensteils II, welcher in Fig. 12 dargestellt ist, ersetzt.

Der modifizierte Verfahrensschritt 1200 beginnt im Zustand 1201. Zunächst wird überprüft, ob der Störspeicheraktualisierungsmodus aktiviert worden ist.

Ist dies nicht der Fall, so wird direkt in Verfahrensschritt 1207 verzweigt. Die dort stattfindende Bewertung von Störechos kann bisherigen Verfahren entsprechen. Vorzugsweise werden die ermittelten Echos mit der im Störspeicher abgelegten Störechokurve verglichen, und entsprechend bewertet.

Ergibt die Überprüfung in Verfahrensschritt 1202 jedoch, dass der Störspeicheraktualisierungsmodus aktiviert worden ist, so wird im Schritt 1203 in Abhängigkeit oder auf Basis der aktuell vorliegenden Echokurve zunächst das Behältenauschniveau N_{B} ermittelt. Ist das Behälterrauschen N_{B} auf das im Werk ermittelte Systemrauschniveau N_{S} des Sensors abgesunken, so wird im Schritt 1205 eine Aktualisierung der Störechokurve im Störechospeicher initiiert, wobei die aktuelle Echokurve im Bereich von 0 m bis zum Ort des Beginns des zuletzt vermessenen Füllstandechos in den Störechospeicher übernommen wird. Im Schritt 1206 wird schließlich der Störspeicheraktualisierungsmodus deaktiviert, bevor mit dem Verfahrensschritt 1207 eine routinemäßige Bewertung der Störechos erfolgt. Das Verfahren endet im Schritt 1208.

Fig. 9 veranschaulicht die Auswirkungen einer Anwendung des Verfahrens. Echokurvendarstellung 901 zeigt die Verhältnisse bei leerem Behälter. Aufgrund der initiierten Störechospeicherung wird der Verlauf der aktuellen Echokurve 9011 im Bereich bis 18 m in den Störechospeicher übernommen. Die sich ergebende Störechokurve 9012 wird ebenfalls in der Darstellung 901 visualisiert. Aufgrund des erhöhten Behälterrauschniveaus N_{B} 9013 wird zudem der Störspeicheraktualisierungsmodus aktiviert.

Die Darstellung 902 zeigt die Echokurve 9021, wie sie nach leichter Befüllung des Behälters empfangen wird. Das Behälterrauschen 9022 verringert sich sehr schnell bis auf das im Werk gespeicherte Niveau des sensoreigenen Rauschens N_{S}. Aufgrund des aktivierten Störspeicheraktualisierungsmodus wird dies zum Anlass genommen, eine neuerliche Störspeicherung innerhalb des Sensors zu initiieren. Die bislang gespeicherte Störechokurve 9023, 9012 wird bis zu einer Entfernung von 17 m unter Verwendung der aktuell vorliegenden Echokurve 9021 aktualisiert. Zudem wird der Störspeicheraktualisierungsmodus wieder deaktiviert.

Von nun an operiert der Sensor in einem normalen Modus gemäß dem Stand der Technik. Darstellung 903 zeigt eine Echokurve 9031, wie sie bei weiter gefülltem Behälter empfangen werden kann. Die Störechokurve 9032 wurde zwischenzeitlich unter Verwendung der Echokurve 9021 aktualisiert, und beinhaltet keinerlei Anteile eines erhöhten Behälterrauschens mehr. Das vom Füllgut herrührende Füllstandecho E5 liegt nun deutlich über der Störechokurve 9032, wohingegen das Störecho E0 weiterhin sicher als Störecho erkannt werden kann 9033. Die Identifikation des Echos E5 als Füllstandecho kann in sicherer und einfacher Art und Weise erfolgen. Das vorliegende Verfahren kompensiert den Effekt eines Anstieges des Behälterrauschens bei vollkommen entleertem Behälter. Zudem kann das vorliegende Verfahren geeignet sein, einen Anstieg des EMV-Rauschens zu kompensieren.

Das Verfahren wird zur Initialisierung und / oder Aktualisierung des Störechospeichers 103 des Füllstandmessgerätes eingesetzt und ist dadurch gekennzeichnet, dass die Initialisierung und / oder Aktualisierung des Störechospeichers von zumindest einem Wert für das Rauschen abhängig ist. Insbesondere kann die Initialisierung und / oder Aktualisierung des Störechospeichers von zumindest einem Wert für das sensoreigene Rauschen 213 abhängig sein. Auch kann die Initialisierung und / oder Aktualisierung des Störechospeichers von zumindest einem Wert für das Behälterrauschen 410 abhängig sein. Zudem kann die Initialisierung und/oder Aktualisierung von zumindest einem Wert für das EMV-Rauschen abhängig sein.

## Patentansprüche

1. Füllstandmessgerät (201, 409) zur Messung eines Füllstands in einem Behälter (209, 701) und zur Störechospeicherung, unter Verwendung elektromagnetischer oder akustischer Wellen, das Füllstandmessgerät (201, 409) aufweisend:
einen Störechospeicher (103) zum Speichern der Störechodaten; und
eine Recheneinheit (220) zur Initialisierung und/oder Aktualisierung von Störechodaten auf Basis eines ersten Wertes (N_{B}), der mit einem ersten Rauschpegel korrespondiert,
wobei die Initialisierung und/oder Aktualisierung der Störechodaten auf Basis des ersten Wertes (N_{B}) dann aktiviert wird, wenn der erste Rauschpegel (N_{B}) größer ist als das, im Werk ermittelte, sensoreigene Rauschen des Sensors (N_{S}),
wobei es sich bei dem ersten Rauschpegel (N_{B}) um einen Behälterrauschpegel bei leerem Behälter (209, 701) handelt,
wobei die Recheneinheit (220) weiterhin zur Aktualisierung der Störechodaten auf Basis eines weiteren Wertes ausgeführt ist, der mit einem weiteren Rauschpegel korrespondiert, welcher einem Behälterrauschen bei leichter Befüllung des Behälters (209, 701) entspricht, wobei der weitere Rauschpegel niedriger ist als das im Werk ermittelte sensoreigene Rauschen des Sensors (N_{S}), und
wobei eine aktuelle Echokurve im Bereich von 0 m bis zum einem Ort eines Beginns des zuletzt vermessenen Füllstandechos in dem Störechospeicher (103) gespeichert wird.

2. Füllstandmessgerät (201, 409) nach einem der vorhergehenden Ansprüche, wobei die Recheneinheit (220) zur Bestimmung des zumindest einen ersten Wertes (N_{B}) oder des zumindest einen zweiten Wertes unter Verwendung einer erfassten Echokurve ausgeführt ist.

3. Füllstandmessgerät (201, 409) nach einem der vorhergehenden Ansprüche, wobei die Recheneinheit (220) zur Bestimmung des zumindest einen ersten Wertes (N_{B}) oder des zumindest einen zweiten Wertes auf Basis einer Regressionsberechnung oder einer Histogrammanalyse ausgeführt ist.

4. Füllstandmessgerät (201, 409) nach einem der vorhergehenden Ansprüche, wobei die Recheneinheit (220) zur Initialisierung und/oder zur Aktualisierung von Störechodaten in Abhängigkeit des zumindest einen ersten Wertes (N_{B}) und/oder des zumindest einen zweiten Wertes ausgeführt ist.

5. Füllstandmessgerät (201, 409) nach einem der vorhergehenden Ansprüche, wobei das Füllstandmessgerät (201, 409) nach dem FMCW- oder Impuls-Laufzeitverfahren arbeitende Füllstandsensoren verwendet.

6. Verfahren zur Messung eines Füllstands in einem Behälter (209, 701) und zur Störechospeicherung, das Verfahren aufweisend die Schritte:
Initialisierung und/oder Aktualisieren der Störechodaten auf Basis eines ersten Wertes (N_{B}), der mit einem ersten Rauschpegel korrespondiert,
wobei die Initialisierung und/oder Aktualisierung der Störechodaten auf Basis des ersten Wertes (N_{B}) dann aktiviert wird, wenn der erste Rauschpegel (N_{B}) größer ist als das, im Werk ermittelte, sensoreigene Rauschen des Sensors (N_{S}),
wobei es sich bei dem ersten Rauschpegel (N_{B}) um einen Behälterrauschpegel bei leerem Behälter (209, 701) handelt, und
Aktualisierung der Störechodaten auf Basis eines weiteren Wertes, der mit einem weiteren Rauschpegel korrespondiert, welcher einem Behälterrauschen bei leichter Befüllung des Behälters (209, 701) entspricht, wobei der weitere Rauschpegel niedriger ist als das im Werk ermittelte sensoreigene Rauschen des Sensors (N_{S}),
wobei eine aktuelle Echokurve im Bereich von 0 m bis zum einem Ort eines Beginns des zuletzt vermessenen Füllstandechos in dem Störechospeicher (103) gespeichert wird.

7. Programmelement, das, wenn es auf einem Prozessor eines Füllstandmessgeräts (201, 409) ausgeführt wird, den Prozessor anleitet, das Verfahren nach Anspruch 6 durchzuführen.

8. Computerlesbares Medium, auf dem ein Programmelement gemäß Anspruch 7 gespeichert ist.

## Claims

1. A fill level measuring device (201, 409) for measuring a level in a container (209, 701) and for storing false echoes, using electromagnetic or acoustic waves, comprising the fill level measuring device (201, 409):
a false echo memory (103) for storing the false echo data; and
a computing unit (220) for initializing and/or updating false echo data on the basis of a first value (N_{B}) corresponding to a first noise level,
wherein the initialisation and/or the updating of the false echo data on the basis of the first value (N_{B}) is activated if the first noise level (N_{B}) is greater than the sensor-inherent noise (N_{S}) determined in a factory,
wherein the first noise level (N_{B}) is a container noise level when the container is empty (209, 701),
wherein the computing unit (220) is further adapted to update the false echo data on the basis of a further value corresponding to a further noise level corresponding to a container noise when the container (209, 701) is lightly filled, the further noise level being lower than the sensor-inherent noise of the sensor (N_{S}) determined in the factory, and wherein a current echo curve in the range from 0 m to a location of a beginning of the last measured level echo is stored in the false echo memory (103).

2. The fill level measuring device (201, 409) according to one of the preceding claims,
wherein the computing unit (220) is designed to determine the at least one first value (N_{B}) or the at least one second value using a detected echo curve.

3. The fill level measuring device (201, 409) according to one of the preceding claims,
wherein the computing unit (220) is designed to determine the at least one first value (N_{B}) or the at least one second value on the basis of a regression calculation or a histogram analysis.

4. The fill level measuring device (201, 409) according to any of the preceding claims,
wherein the computing unit (220) is designed for initialising and/or updating false echo data as a function of the at least one first value (N_{B}) and/or the at least one second value.

5. The fill level measuring device (201, 409) according to one of the preceding claims,
wherein the fill level measuring device (201, 409) uses level sensors operating according to the FMCW or pulse transit time method.

6. A method for measuring a fill level in a container (209, 701) and for false echo storage, the method comprising the steps of:
initialising and/or updating the false echo data on the basis of a first value (N_{B}) corresponding to a first noise level,
wherein the initialisation and/or updating of the false echo data on the basis of the first value (N_{B}) is activated if the first noise level (N_{B}) is greater than the sensor-inherent noise (N_{S}) determined in a factory, wherein the first noise level (N_{B}) is a container noise level when the container is empty (209, 701); and
updating the false echo data on the basis of a further value corresponding to a further noise level corresponding to a container noise when the container is slightly filled (209, 701), the further noise level being lower than the sensor-inherent noise of the sensor (N_{S}) determined in the factory,
wherein a current echo curve in the range from 0 m to a location of a beginning of the last measured level echo is stored in the false echo memory (103).

7. A program element which, when executed on a processor of a fill level measuring device (201, 409), instructs the processor to perform the method according to claim 6.

8. A computer-readable medium on which a program element according to claim 7 is stored.

## Revendications

1. Appareil de mesure de niveau de remplissage (201, 409) pour mesurer un niveau de remplissage dans un récipient (209, 701) et pour mémoriser des échos parasites en utilisant des ondes électromagnétiques ou acoustiques, l'appareil de mesure de niveau de remplissage (201, 409) présentant :
une mémoire d'échos parasites (103) pour stocker les données d'écho parasite ; et
une unité arithmétique (220) pour initialiser et/ou actualiser les données d'écho parasite sur la base d'une première valeur (N_{B}) qui correspond à un premier niveau de bruit,
dans lequel l'initialisation et/ou l'actualisation des données d'écho parasite sur la base de la première valeur (N_{B}) est activée lorsque le premier niveau de bruit (N_{B}) est supérieur au bruit propre de capteur du capteur (N_{S}) déterminé en usine,
dans lequel le premier niveau de bruit (N_{B}) est un niveau de bruit de récipient lorsque le récipient (209, 701) est vide, dans lequel l'unité arithmétique (220) est en outre conçue pour actualiser les données d'écho parasite sur la base d'une autre valeur qui correspond à un autre niveau de bruit, lequel correspond à un bruit de récipient lorsque le récipient (209, 701) est légèrement rempli, l'autre niveau de bruit étant inférieur au bruit propre de capteur du capteur (N_{S}) déterminé en usine, et
dans lequel une courbe d'écho actuelle dans la plage de 0 m jusqu'à un point d'un début du dernier écho de niveau de remplissage mesuré est mémorisée dans la mémoire d'échos parasites (103).

2. Appareil de mesure de niveau de remplissage (201, 409) selon l'une des revendications précédentes, dans lequel l'unité arithmétique (220) est conçue pour déterminer ladite au moins une première valeur (N_{B}) ou ladite au moins une deuxième valeur en utilisant une courbe d'écho détectée.

3. Appareil de mesure de niveau de remplissage (201, 409) selon l'une des revendications précédentes, dans lequel l'unité arithmétique (220) est conçue pour déterminer ladite au moins une première valeur (N_{B}) ou ladite au moins une deuxième valeur sur la base d'un calcul de régression ou d'une analyse d'histogramme.

4. Appareil de mesure de niveau de remplissage (201, 409) selon l'une des revendications précédentes, dans lequel l'unité arithmétique (220) est conçue pour initialiser et/ou actualiser les données d'écho parasite en fonction de ladite au moins une première valeur (N_{B}) et/ou de ladite au moins une deuxième valeur.

5. Appareil de mesure de niveau de remplissage (201, 409) selon l'une des revendications précédentes,
dans lequel l'appareil de mesure de niveau de remplissage (201, 409) utilise des capteurs de niveau de remplissage fonctionnant selon le procédé FMCW ou du temps de transit d'impulsions.

6. Procédé pour mesurer un niveau de remplissage dans un récipient (209, 701) et pour mémoriser des échos parasites, le procédé comprenant les étapes suivantes :
initialisation et/ou actualisation des données d'écho parasite sur la base d'une première valeur (N_{B}) qui correspond à un premier niveau de bruit,
dans lequel l'initialisation et/ou l'actualisation des données d'écho parasite sur la base de la première valeur (N_{B}) est activée lorsque le premier niveau de bruit (N_{B}) est supérieur au bruit propre de capteur du capteur (N_{S}) déterminé en usine,
dans lequel le premier niveau de bruit (N_{B}) est un niveau de bruit de récipient lorsque le récipient (209, 701) est vide ; et
actualisation des données d'écho parasite sur la base d'une autre valeur qui correspond à un autre niveau de bruit, lequel correspond à un bruit de récipient lorsque le récipient (209, 701) est légèrement rempli, l'autre niveau de bruit étant inférieur au bruit propre de capteur du capteur (N_{S}) déterminé en usine,
dans lequel une courbe d'écho actuelle dans la plage de 0 m jusqu'à un point d'un début du dernier écho de niveau de remplissage mesuré est mémorisée dans la mémoire d'échos parasites (103).

7. Élément de programme qui, lorsqu'il est exécuté sur un processeur d'un appareil de mesure de niveau de remplissage (201, 409), ordonne au processeur de mettre en œuvre le procédé selon la revendication 6.

8. Support lisible par ordinateur sur lequel est stocké un élément de programme selon la revendication 7.
